(19) Europäisches Patentamt
European Patent Office
Office européen des brevets

(11) **EP 2 528 205 A1**

(12) **EUROPEAN PATENT APPLICATION**
published in accordance with Art. 153(4) EPC

(43) Date of publication:
**28.11.2012 Bulletin 2012/48**

(21) Application number: **10843744.3**

(22) Date of filing: **23.11.2010**

(51) Int Cl.:
**H02K 21/14** (2006.01) **H02K 1/27** (2006.01)
**H02K 11/02** (2006.01)

(86) International application number:
**PCT/CN2010/079016**

(87) International publication number:
**WO 2011/088704 (28.07.2011 Gazette 2011/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2010 CN 201010101270**

(71) Applicant: **Suzhou Taitong Electrics Co., Ltd
Jiangsu 215400 (CN)**

(72) Inventor: **LE, Xiufeng
Taicang
Jiangsu 215400 (CN)**

(74) Representative: **De Vries & Metman
Overschiestraat 180
1062 XK Amsterdam (NL)**

(54) **HIGH-EFFICIENCY AND ENERGY-SAVING PERMANENT MAGNET SYNCHRONOUS MOTOR**

(57) A permanent magnet synchronous (PMS) motor includes a stator (3), a rotor (2) which can rotate relative to the stator (3), at least a pair of permanent magnets (1) distributed over the rotor system (2), magnetic isolation blocks (25) in between the two permanent magnets (1), and the protection magnetic circuits (4) over the rotor (2) and in between the permanent magnet (1) and the magnetic isolation block (25). The permanent magnet (1) is used to produce magnetic source. The protection magnetic circuit (4) produces far less magnetic resistance than the internalmagnetic resistance of permanent magnet (1). At the time of the start or shut-down of the motor or during the motor operation, the permanent magnets (1) can generate magnetic flux shock wave as a result of the transient mutation of the power grid, and the protection magnetic circuit (4) of the motor can release the magnetic flux shock wave in such a way that the permanent magnets (1) can always work in the safe zone of the permanent magnet demagnetization curve, which effectively protects the permanent magnets (1) in the motor. The PMS motor improves system reliability and character stability and extends the useful life of the motor.

Figure 4

**Description**

**Technical Field**

The invention relates to a synchronous motor.

**Technical Background**

The PMS motor can save energy because (1) it greatly improves the power factor of the AC induction motor and (2) it can avoid the secondary loop loss by synchronizing the rotor and magnetic field. The PMS motor save 10 to 15 percent energy comparing with the asynchronous motor at the same power level.

As people are more conscious to energy conservation and environmental protection, a motor industry insiders reached a consensus that PMS motors shall in a large scale replace asynchronous motors as a universal high efficient and energy saving power supply. The popularization of the PMS motors is slowed down due to the structural and production complexity and the high costs of rare earth permanent magnet materials. The product quality, stability and durability of the PMS motor are yet to be improved.

As we know, the current inner rotor PMS motor uses the rotor component similar as the short circuit conducting stub of an asynchronous motor as the start winding. The permanent magnet distributed over the rotor of the synchronous motor provides a source of magnetic pole. According to the permanent magnet motor structure types, the permanent magnets can have different arrangements. But it must have the correct method of magnetic circuit and match the stator winding magnetic circuit. Currently, in the most of the PMS motor products, the rotor uses the low carbon steel or Electrician pure iron for conduction materials, stainless steel or aluminum for Magnetic circuit insulation material and pure copper or aluminum for the short circuit conducting stub. Based on the rotor and stator magnetic field synchronization, the rotor of magnetic conduction circuit and the lump of magnetic resistance are designed as a whole or single structure. It is feasible theoretically simply from the synchronous motor principle. However, it ignores particularity of a permanent magnet in the actual operation. When the permanent magnet motor is used as a power source equipment, it must undergo frequent starts and shut downs. It also is also impacted by magnetic potential formed by random disturbance and shock from the power grid random. Once the impact of the interference magnetic potential is above the permanent magnet demagnetization curve, it will lead to permanent magnet's graduate demagnetization, which eventually destroys the permanent magnet motor. This is also the key cause of the low reliability of the current PMS motor. The magnetic potential caused by the random disturbance is a transient process. The following is a detailed analysis of the impact of such transient process on permanent magnet.

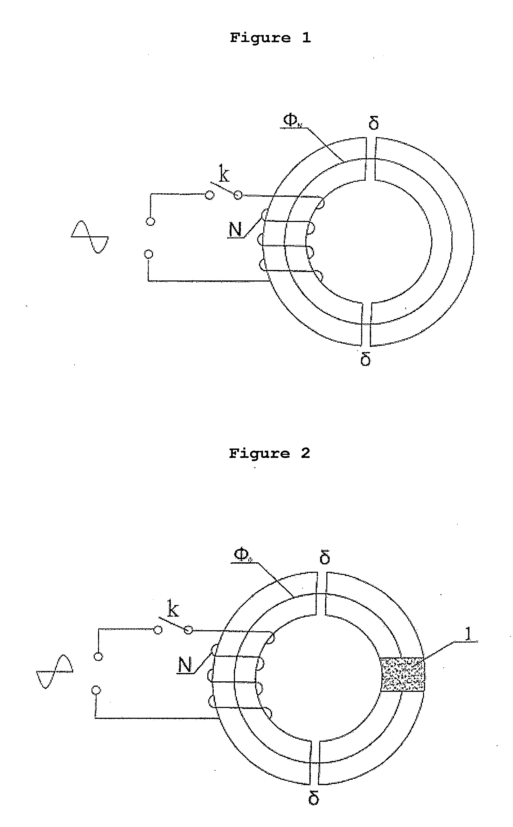

Figure 1 illustrates a core coil without a permanent magnet. The magnetic circuit constitutes a closed loop by way of two air gap $\delta$. The coil N is added AC voltage. When the switch K is randomly on or off, the coil inductance is calculated as:

$$L = \frac{\mu_0 \mu_s S N^2}{l + 2\mu_s \delta} \qquad (1)$$

In the above equation, S is cross-sectional area of the core, N is coil circle number, $l$ is the average length of the magnetic core, $\mu_0$ is air permeability, and $\mu_s$, is core relative magnetic conductivity.

Coil current is calculated as:

$$i = \frac{1}{L} \int e \, dt \qquad (2)$$

From the above (1) and (2) equation, the amount of the current and inductance is inversely proportional. Therefore, the motor with saturated inductance design has limited winding current. The asynchronous motor operates like this when it is in the opening running status.

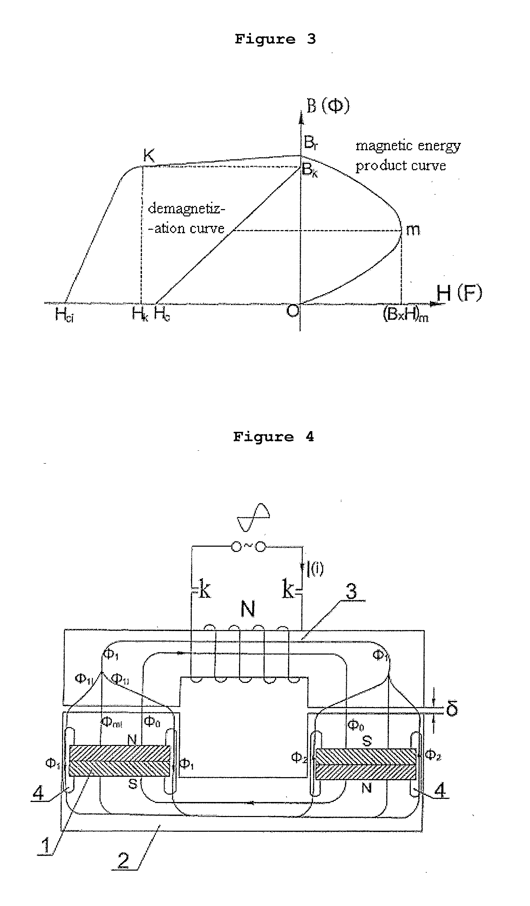

When the core is inserted into the permanent magnet, as showed in figure 2, the core can become magnetic saturated if the permanent magnet has magnetic potential large enough to generate the magnetic flux $\Phi_0$. The core at the magnetic saturation loses its influence to the coil inductance, equivalent to the result from the above equation (1), when the core in cross-sectional area $S$ becomes near zero ($S \rightarrow 0$), the coil inductance value $L$ becomes as small as the air core coil. At this time, the current is only subject to the small winding dc resistance, leading to current i up sharply and resulting in a big impact magnetic potential $F_i = iN$. The transient value depends on the switch time and voltage phase. Highest impact current occurs in the peaks of sine wave. If the magnetomotive forces of both the transient and the permanent magnet are in the same direction, it is the magnetic direction for help. The permanent magnet is not impacted. On the contrary, if the magnetomotive forces of both the transient and the permanent magnet are in the opposite direction, it will make permanent magnet demagnetization into reversible area as shown in figure 3. If back impact magnetic potential is large enough to cause permanent magnet field exceeding a critical coercive force $H_k$, the permanent magnet enters into irreversible demagnetization area. If reverse impact magnetic potential reaches the intrinsic coercive force $H_{ci}$, the permanent magnet will be completely demagnetized. Therefore, the permanent magnet motor will be destructed.

In fact, the transient back magnetic potential impacts once, it only degausses in the place corresponding to the winding, and the permanent magnet residual magnetism $B_r(\Phi)$ goes down slightly. With repeated irreversible degaussing, permanent magnet residual magnetism $B_r(\Phi)$ continues to go down. When the accumulated decrease reaches a point where the permanent magnet residual magnetism $B_r(\Phi)$ cannot support the synchronous torque, the motor falls into the out-of-step operation condition. There is slip speed between the stator and the rotor magnetic field. The overall structure of the magnet body and the magnetic conduction block form eddy current as a result of cutting field lines, leading to the rise of the rotor temperature. The temperature continues to rise until the permanent magnetic material is hot demagnetized. The permanent magnet function is lost completely and the motor is destroyed. The above analysis shows that the PMS motor can only be allowed to work in the demagnetization curve $B_kH_c$ range. Even if the start or show down causes the random transient magnetic potential impact, the working point of the PMS motor must be constraint in the demagnetization curve's permitted range. Traditionally, for improving the operational reliability of the PMS motor, the method of increasing the air gap to increase the magnetic resistance of the magnetic circuit or thickening the permanent magnet or increasing magnet energy product to resist interference impact is used. These methods not only reduce the PMS motor's performance but also significantly increase the material costs. The improvement in the PMS motor's operational reliability is not obvious. The magnetic potential impact of the permanent magnet demagnetization is not fundamentally solved.

A different case reasoning is developed. If the PMS motor works under the overload and out-of-step operation condition for a long time, the eddy current is generated and the temperature rises. The accumulated heat causes the temperature over the permanent magnetic material demagnetization point, the motor will also be destroyed. The difference is that the first case is caused by the interference impact of the magnetic potential and the other case is caused by the out-of-step overload. The key to create an energy efficient and operational reliable PMS motor is to increase the out-of-step torque design value as much as possible, improve the short-term resistance ability to the out-of-step operation and to develop the PMS motor's ability to sustain the long term out-of-step operation.

**Summary of Invention**

The purpose of the invention is to provide a PMS motor that can effectively avoid the permanent magnet demagnetization caused by the magnetic potential impact in the operation and improve the reliability.

To achieve the above purpose, the technical plan of the invention is a high energy efficient PMS motor which includes the stator, a rotor movable with the stator, at least a pair of the permanent magnet used for magnetic resource and distributed over the rotor system, the resistance magnet in between the two permanent magnets, and the protection magnetic circuits over the rotor and in between the permanent magnet and the resistance magnet. The protection magnetic circuit produces far less magnetic resistance than the internal body resistance of permanent magnet. At the time of the start or shut down of a motor or during the motor operation, the permanent magnets can generate magnetic flux shock wave as a result of the transient mutation of the power grid. The protection magnet circuit of the high energy efficient PMS motor can release the magnetic flux shock wave in such a way that the permanent magnets can always work in the safe zone of the permanent magnet demagnetization curve, which effectively protects the permanent magnets in the motor.

Because the protection magnetic circuit is set alongside the permanent magnet, the magnetic resistance of the protection magnetic circuit is far less than that of permanent magnetic resistance. When the motor starts and shuts down frequently, or when the peripheral equipment and the power grid transient interference $\dfrac{dv}{dt}$ form the impact of the

strong magnetic flux $\dfrac{d\Phi}{dt}$ , according to the Ohm's law for magnetic circuits, $\dfrac{d\Phi}{dt}$ magnetic potential impact must pass through the small magnetic resistance way, weakening the interference of the permanent magnet impact and making permanent magnet working in the safety area of the demagnetization curve. Compared with the traditional technologies of the PMS motor, the high energy efficient PMS motor reaches the operation stability and reliability without using any of the method under the traditional technologies. Consequently, the high energy efficient PMS motor reduces the material costs and offers extended service life.

**Description of Figures**

Figure 1 is a diagram of the core coil without permanent magnet;
Figure 2 is a diagram of the core coil with the permanent magnet;
Figure 3 shows a magnetization curve of the permanent magnet;
Figure 4 is a diagram of the mechanism for the PMS motor according to the present invention;
Figure 5 shows a cross section of the PMS motor according to the present invention;
Figure 6 is the A-A direction section view for figure 5; and
Figure 7 shows the structure of the silicon steel rotor using overlying and die cast aluminum molding;
Wherein the numbers in the above figures represent 1-Permanent magnet (PM); 2-rotor; 21- Rotor core; 23-Baffle at the end of the core; 24-Shaft; 25- Magnetic isolation block; 3-Stator; 31-Stator winding; 32-Stator core; 4- Protect magnetic circuit; 6-motor frame; 7- Cooling fan.

**Detailed Description of Preferred Embodiements**

**At least one preferred embodiements** of this invention is discussed hereinafter using the example in the attached drawings.
A PMS motor according to the present invention includes astator, a rotor movable with the stator, at least a pair of permanent magnets distributed over the rotor system. The permanent magnet provides a magnetic source to form a magnetic circuit between the rotor and the stator. The stator includes a coil winding and a switch or transducer which is connected with the coil winding for start or shut-down of the motor. Figure 4 shows the magnetic circuit principle of one phase of stator winding and the corresponding rotor magnetic poles for the PMS motor with the invented technologies, where 3 is a stator, 2 is a rotor and 1 is a pair of permanent magnets of series polarity setting in a rotor 2. The stator 3 includes a coil N on a stator core and a switch K connected with the coil N. The pair of permanent magnets 1 arranged within the rotor 2 form a magnetic circuit. The polarity of the permanent magnet is identified with sign S and N in Figure 4. Two protection magnetic circuits 4 are placed on the two sides of the permanent magnet 1. The protection magnetic circuit 4 is made of good conduction material of which the magnetic resistance is far less than NdFeB, such as electrician pure iron and silicon steel material, of which the magnetic resistance is $10^{-3}$-$10^{-4}$ times of of the inner magnetic resistance the permanent magnet. Because of the protection circuit 4, magnetic potential builds a low resistance passageway for transient disturbance, effectively reducing degaussing of interference magnetic potential. The permanent magnet is ensured always working in the safety area of magnetization curve. The detailed description of the functional principle is followed.
As illustrated in Figure 4, when the permanent magnet 1 is placed in the rotor core, it provides a magnetic flux of $\Phi_n$. The protection magnetic circuit 4 forms $\Phi_1$, $\Phi_2$ symmetric pathways at the two sides of the permanent magnet 1. It will have short a small amount of magnetic flux $\Phi_n$-2$\Phi_1$. According to the magnetic circuit Amp's loop laws:
$$\int Hdl = \sum I \qquad\qquad (3)$$

$$HL - NI = F \qquad (4)$$

from equation (4), $\Phi_1$ can be calculated as

$$\Phi_1 = \frac{\Phi_0 R_{m1} R_\delta - H_1 l_1 R_\delta - 2H_0 \delta R_{m1}}{2 R_{m1} R_\delta} \qquad (5)$$

where, in the equations, $\Phi_0$ is the permanent magnetic flux, $R_{m1}$ is the magnetic resistance of the protection magnetic circuit, $R_\delta$ is the air gap magnetic resistance, $H_1$ is the magnetic field intensity of the magnetic protection circuit, $l_1$ is the average length of the protection magnetic circuit.

When a system undergoes transient interference impact of the switch K, the magnetic flux $\Phi_i$, the permanent magnet component $\Phi_{mi}$ and the protection magnetic circuit $\Phi_{li}$, form:

$$\Phi_i = 2\Phi_{l1} + \Phi_{mi} \qquad (6)$$

$$\Phi_{li} = \mu \frac{F_i S_1}{l_1} \qquad (7)$$

$$\Phi_{mi} = \mu \mu_g \frac{F_i S}{\mu_g l + \mu l_g} \qquad (8)$$

where, $\mu$ is the magnetic conductivity for the protection magnetic circuit, $\mu_g$ is the magnetic conductivity for the permanent magnet, $F_i$ is the transient shock magnetic potential, $S_1$ is the sectional area of protection magnetic circuit, $l$ is the average length of the conduction circuit, and $S$ is the permanent magnet effective area. Here , we choose the silicon for the protection of the magnetic circuit, because the silicon steel's relative permeability is about 7000, and the permanent magnet's relative permeability is about 1. Even if $S_1$ is a few times smaller than $S$, from the equation (7) and (8), the protection magnetic flux are far outweigh the permanent magnetic flux, to be $\Phi_{li} \gg \Phi_{mi}$. Therefore, the protection magnetic circuit can effectively release interference magnetic potential impact so that the permanent magnet is working in the demagnetization curve safety area, improving the reliability of the permanent magnet motor and prolonging the life of the permanent magnet motor.

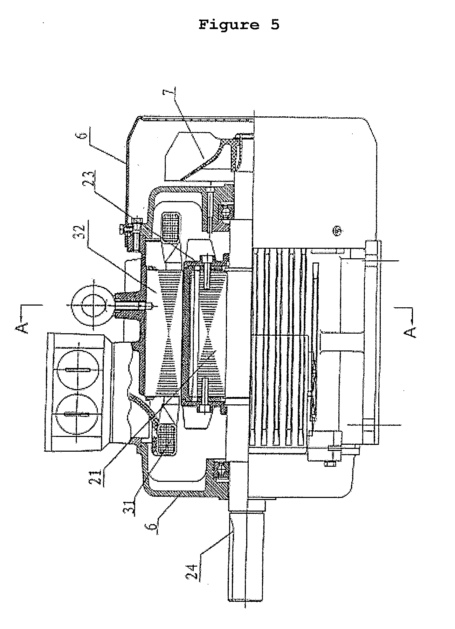

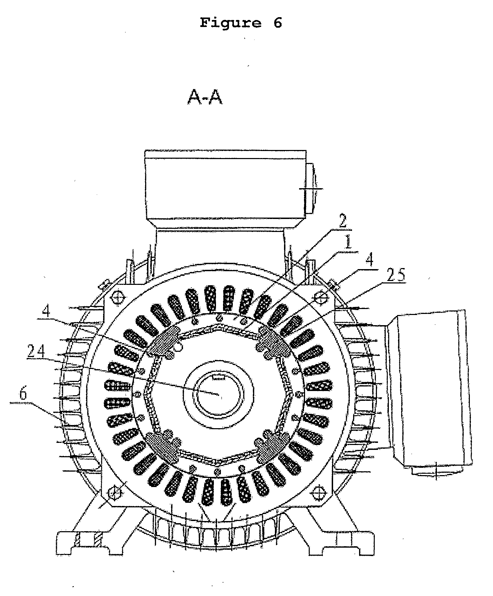

Figures 5 and 6 is the schematic diagrams for the permanent magnet motor with the protection magnetic circuit resulted from this invention. Figure 5 shows the main structure of the motor which includes the stator section, the rotor section, the motor shell 6, and the cooling fan 7. The stator section includes the winding 31 and the stator core 32. The rotor section includes the rotor core, the rotor end baffle 23 and the shaft 24. Figure 6 shows the cross section of the rotor. For the motor in this example, the permanent magnet are two pairs, thus, the motor is a four-pole motor. The permanent magnet is circularly distributed along the rotor. The adjacent permanent magnets 1 have the opposite polarity. In between the two adjacent permanent magnets is placed a magnetic isolation block 25. Between the permanent magnet 1 and the magnetic isolation block 25 is conduction pathways, or the protection magnetic circuit 4. The section of the protection magnet pathway is several times smaller than the permanent magnet, though, the magnetic resistance of the protection magnet circuit 4 is $10^{-3}$-$10^{-4}$ times smaller than the permanent magnet. During the start, shut down or operation of the motor, the interference magnetic potential is degaussed through the protection magnetic circuit 4 instead of the permanent magnet. The permanent magnets are protected.

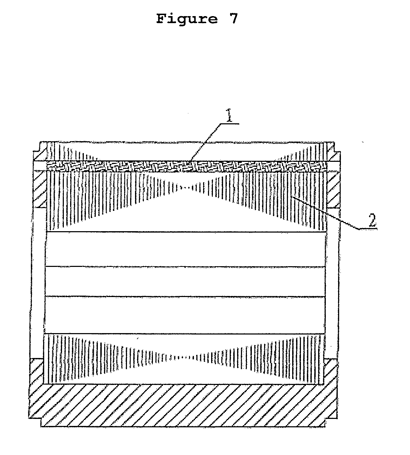

The protection magnetic circuit 4 can be made of the highly magnet conductive material and laid over the rotor, or the rotor is made directly of the highly magnet conductive material. In this example as showed in Figure 7, the protection magnetic circuit and the rotor in made in whole using the siliconized plate through the overlying process. The rotor production techniques for the asynchronous motor can be used for the PMS motor, not only avoiding the set up costs but also reducing the overall cost due to mass production.

The example is only used for describing technological conception and characteristics of the invention to help people to understand the technologies and content of the invention so that they can properly apply the invention. The example cannot be used to limit the scope of protection of this invention, or the invention is not limited to four-poled permanent magnet motors. Any change or modification based on or extended from the invention is covered within the protection scope of the invention.


## Claims

1.  A high energy efficient permanent magnet synchronous (PMS) motor, comprising a stator and a rotor which can rotate relative to the stator , at least a couple of permanent magnets distributed on the rotor to produce magnetic source, magnetic isolation blocks arranged between two nearby permanent magnets, is **characterized in that** a protection magnetic circuit located between the magnetic isolation block and the permanent magnet is arranged on the rotor, of which the material conductis much higher than the permanent magnet, so that at the time of start or shut-down of the motor or during operating of the motor the magnetic flux shock wave generated by the permanent magnet under transient jump of the power grid can be released through the protection magnet circuit.

2.  The high energy efficient PMS motor according to claim 1, wherein between each magnetic isolation block and the permanent magnet is arranged a protection magnetic circuit.

3.  The high energy efficient PMS motor according to claim 1, wherein the protection magnetic circuit is formed of the electrician pure iron or silicon steel set on the rotor.

4.  The high energy efficient PMS motor according to claim 1 or 3, wherein the protection magnetic circuit is overlying formed in the rotor with siliconized plate.

5.  The high energy efficient PMS motor according to claim 1,wherein the magnetic resistance of the protection magnetic circuit is $10^{-3}$-$10^{-4}$ times of the body resistance of the permanent magnet.

**Figure 1**

**Figure 2**

## Figure 3

## Figure 4

Figure 5

Figure 6

A-A

Figure 7

| INTERNATIONAL SEARCH REPORT | International application No. |
|---|---|
| | PCT/CN2010/079016 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H02K21/-, H02K1/-, H02K11/-

Documentation searched other than minimum documentation to the extent that such documents are included in the fields searched

Electronic data base consulted during the international search (name of data base and, where practicable, search terms used)

WPI; EPODOC; CNKI; CNPAT: permanent magnet, synchronous, magnet+, insulat+, isolate+

**C. DOCUMENTS CONSIDERED TO BE RELEVANT**

| Category* | Citation of document, with indication, where appropriate, of the relevant passages | Relevant to claim No. |
|---|---|---|
| X | CN101110543A(SHANGHAI HITACHI ELECTRICAL APPARTUS CO., LTD.) 23 January 2008(23.01.2008) specification: page 3, line 21-page 4, line 16, figure 1 | 1-5 |
| PX | CN101783561A(SUZHOU TAITONG ELECTRICS CO., LTD.)21 July 2010(21.07.2010) Claims 1-5 | 1-5 |
| A | CN2726201Y(SUZHOU BAISHENG RARE EARTH POWER CO., LTD.) 14 September 2005(14.09.2005) the whole document | 1-5 |
| A | CN1461090A(UNIVERSITY HARBIN INDUSTRY) 10 December 2003(10.12.2003) the whole document | 1-5 |
| A | JP2000-166145A(OKUMA CORP) 16 June 2000(16.06.2000) the whole document | 1-5 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 14 January 2011(14.01.2011) | **03 Mar. 2011 (03.03.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>MA, Yujie<br><br>Telephone No. (86-10)62414304 |
|---|---|

Form PCT/ISA /210 (second sheet) (July 2009)

## INTERNATIONAL SEARCH REPORT
Information on patent family members

International application No.

PCT/CN2010/079016

| Patent Documents referred in the Report | Publication Date | Patent Family | Publication Date |
|---|---|---|---|
| CN101110543A | 23.01.2008 | NONE | |
| CN101783561 | 21.07.2010 | NONE | |
| CN2726201Y | 14.09.2005 | NONE | |
| CN1461090A | 10.12.2003 | NONE | |
| JP2000-166145A | 16.06.2000 | NONE | |

Form PCT/ISA /210 (patent family annex) (July 2009)

## INTERNATIONAL SEARCH REPORT

International application No.

*PCT/CN2010/079016*

A. CLASSIFICATION OF SUBJECT MATTER


H02K21/14 (2006.01) i
H02K1/27 (2006.01) i
H02K11/02 (2006.01) n

Form PCT/ISA /210 (extra sheet) (July 2009)